Europäisches Patentamt

European Patent Office

Office européen des brevets

(11) Publication number: **0 374 830**
**A2**

## EUROPEAN PATENT APPLICATION

(21) Application number: **89123454.4**

(51) Int. Cl.5 **G06F 9/26**

(22) Date of filing: **19.12.89**

(30) Priority: **19.12.88 US 286582**

(43) Date of publication of application:
**27.06.90 Bulletin 90/26**

(84) Designated Contracting States:
**DE FR GB IT**

(71) Applicant: **Bull HN Information Systems Inc.**
**300 Concord Road**
**Billerica, MA 01821(US)**

(72) Inventor: **Kelly, Richard P.**
**12 Tilton Street**
**Nahua, NH 03060(US)**
Inventor: **Ledoux, Robert V.**
**4 Nesenkeag Drive**
**Litschfield, NH 03051(US)**

(74) Representative: **Dost, Wolfgang,**
**Dr.rer.nat.,Dipl.-Chem. et al**
**Patent- & Rechtsanwälte Bardehle .**
**Pagenberg . Dost . Altenburg . Frohwitter .**
**Geissler & Partner Galileiplatz 1 Postfach 86**
**06 20**
**D-8000 München 86(DE)**

(54) **Control store address generator for developing unique instruction execution starting address.**

(57) A data processing system includes apparatus for executing instructions during a single cycle of operation. The instruction includes an instruction type field, the bits of which select one of four control store address formats. Instruction crack logic appends bits to the formats to indicate the characteristics of the operands. The resulting control store address is applied to the control store. The firmware word read from the addressed location controls the execution of the instruction.

Fig. 2

EP 0 374 830 A2

## Control Store Address Generator For Developing Unique Instruction Execution Starting Address

Scope Of The Invention

This invention relates primarily to the data processor field and more specifically to a firmware controlled microprocessor.

Prior Art

Many data processing systems are firmware controlled. That is a central processor unit (CPU) includes a control store which stores a number of firmware words. Each firmware word includes a number of bits which when decoded control various logical operations. The CPU executes software instructions by addressing a sequence of control store locations for each instruction on successive CPU cycles of operation.

A typical firmware controlled CPU operation is described in United States Patent Number 3,634,883, entitled "MICRO INSTRUCTION ADDRESS MODIFICATION AND BRANCH SYSTEM" where micro conditional control, such as may occur in multiplication or division, is translated into microbranches to expedite the operation execution and to minimize the number of microinstructions required.

## OBJECTS OF THE INVENTION

Accordingly it is a primary object of the invention to improve the throughput of the data processor system by executing software instructions during a single cycle.

## SUMMARY OF THE INVENTION

The data processing system includes apparatus for executing software instructions during a single cycle of operation. Each instruction received is stored in a first in - first out register. The instruction includes bits specifying an instruction type, an address syllable type and a bit type. The instruction type bits specify one of four control store address formats, a Generic instruction format, an Immediate instruction format, a Basic/Extended Integer (EII) instruction format and a Scientific instruction format by selecting one of four switch positions.

The instruction crack logic applies a number of signals to the switch format to describe the characteristics of the operands, single or double, floating point or integer, and single or double precision. The logic also specifies the Basic or EII instruction. Firmware bits specify the low order bits of the control store address. Instruction OP CODE bits are applied to the switch as well as, and if applicable, the address syllable type bits and the bit type bits. The resulting control store address is applied to the control store to read out the firmware word which executes the instruction in a single cycle of operation.

## DESCRIPTION OF THE DRAWINGS

Figure 1 is a block diagram of the overall system which includes the apparatus of the present invention;

Figure 2 is a more detailed block diagram of the overall system of Figure 1;

Figure 3 is a logic block diagram of major elements of the production pipeline cycles;

Figure 4 shows the bit configurations of the software instructions that are applied to the apparatus of the invention as a step in the execution of the instructions.

Figure 5 shows the control store address formats generated by the apparatus of the invention.

Figure 6 shows the apparatus of the invention.

Figure 7 shows a typical instruction used as an example to demonstrate the invention.

Figure 8A shows a block diagram of the A unit firmware executing the operand portion of the typical instruction.

Figure 8B shows a block diagram of the E unit firmware executing the typical instruction with the use of the apparatus of the invention.

## DESCRIPTION OF THE PREFERRED EMBODIMENT

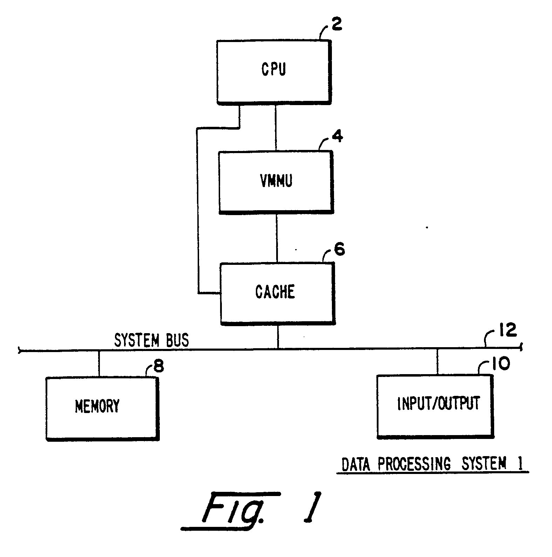

Figure 1 shows a block diagram of a production pipeline data processing system 1. Included are a central processing unit (CPU) 2, a virtual memory management unit (VMMU) 4, a cache unit 6, a memory subsystem 8, and input/output peripheral unit 10. The cache unit 6, memory unit 8, and input/output peripheral unit 10 are all coupled in common to a system bus 12. The memory 8 stores instructions and operands. Those operands and instructions, having the highest probability of being executed immediately, are transferred to cache unit 6 from the memory subsystem 8.

The CPU 2 receives instructions from the cache unit 6 and in the execution of these instructions sends the virtual address portion of the instruction to VMMU 4. The VMMU 4 translates the virtual address into a physical address which are applied to cache unit 6 for the fetching the necessary operands to allow the CPU 2 to execute the instructions.

The input/output unit 10 represents typically any number of peripheral controllers with their devices, or an input/output processor which controls peripheral controllers and devices, or the unit 10 may represent a communications subsystem.

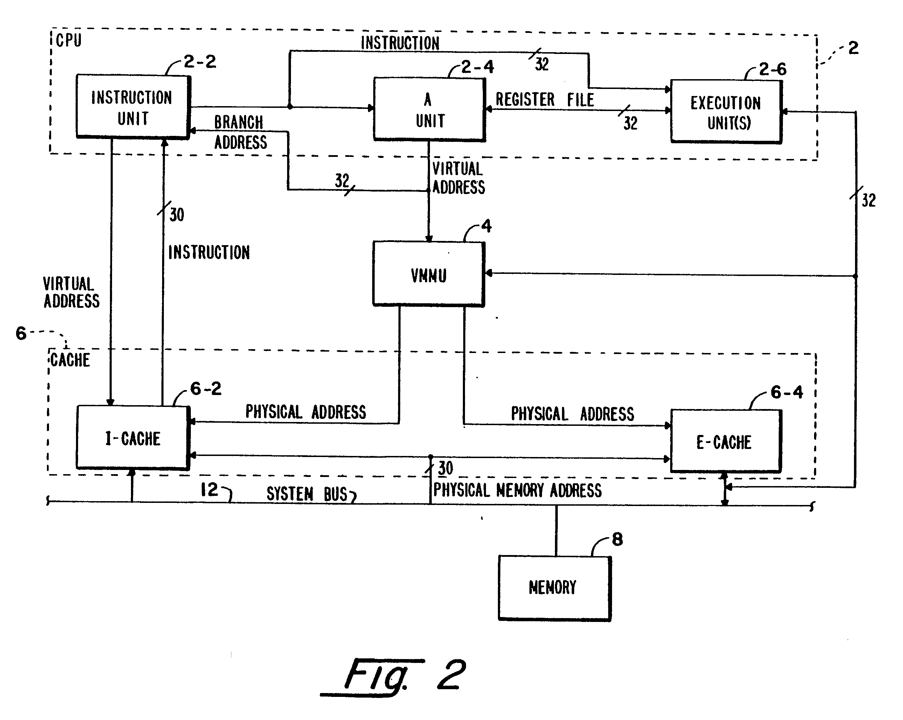

Figure 2 shows in block diagram form the major elements that make up the CPU 2 and the cache unit 6. The CPU 2 includes an instruction (I) unit 2-2, an A unit 2-4, and a number of execution (E) units 2-6. The execution units 2-6 could be a scientific instruction processor or a commercial instruction processor. However, for simplicity of description, only the operation of one of the execution units 2-6 is described which is sufficient to understand the invention.

The cache unit 6 includes an I-cache 6-2 and an E-cache 6-4. The I-cache 6-2 stores the instructions that are to be executed and the E-cache 6-4 stores the operands upon which the instructions operate. The I unit 2-2 performs essentially two functions. It prefetches instructions from I-cache 6-2 and then cracks those instructions to determine how the other units, namely the A unit 2-4 and the E unit 2-6, will further process the instruction. In addition the I-unit 2-2 executes certain branch instructions which are then removed from the production line.

The A unit 2-4 receives the instruction from the I-unit 2-2 and executes the instruction if it is a register-to-register instruction.

When the instruction is to be executed by the E unit 2-6, the A unit 2-4 sends a virtual address to the VMMU 4 which translates it into a physical address for the E-cache unit 6-4. E-cache 6-4 sends the operands to the E unit 2-6 for the completion of the execution of the instruction originally received by the instruction unit 2-2 from the I-cache unit 6-2.

The A unit 2-4 will also confirm the execution of a branch instruction and send the branch address back to the instruction unit 2-2 which has already requested the next instruction at the location in I-cache 6-2 specified by the I unit 2-2 pre-fetch branch address. Both the A unit 2-4 and the E unit 2-6 include register files which store the contents of the registers which are accessible to the programmers, that is, so called Software visible registers.

Both the I-cache 6-2 and the E-cache 6-4 are coupled to system bus 12 and their contents are updated with instructions and operands received from memory 8. Instructions are executed in a production pipeline fashion by the elements of CPU 2. That is, the I unit 2-2 receives an instruction from I-cache 6-2, cracks it, and then sends the instruction to the A unit 2-4. The A unit 2-4 either executes the instruction or sends the virtual address to the VMMU 4 for translation in order to address the E-cache 6-4. E-cache 6-4 sends the designated operands to the E unit 2-6.

While the A unit 2-4 is executing its portion of the first instruction from the I-unit 2-2, the I-unit 2-2 is fetching the second instruction and subsequent instructions. from I-cache 6-2. When the A unit 2-4 sends the virtual address specified by the first instruction to the VMMU 4 and notifies the I unit 2-2 of that event, the I unit 2-2 sends, the second instruction to the A unit 2-4. The VMMU 4 addresses the E-cache 6-4 while the A unit 2-4 is processing the second instruction in the pipeline. When the E unit 2-6 is executing the first instruction, the VMMU 4 may be addressing E-cache to fetch the operands of the second instruction while the A unit 2-4 is generating a virtual address of the third instruction. Meanwhile, the I unit 2-2 is cracking the fourth instruction and fetching one of the subsequent instructions. Therefore, in this typical example, there could be five instructions progressing down the production line.

However, since the I unit 2-2 can execute certain branch instructions, and the A unit 2-4 can execute certain software visible register instructions, they are removed from the production line as soon as the execution of those instructions is completed. Similarly, when the A unit 2-4 is processing a branch instruction and the conditions of the branch are met, the A unit 2-4 immediately confirms the branch address of the I unit 2-2 and that branch instruction will be removed from the production line. This mode and method of operation results in increased throughput as compared to the prior art.

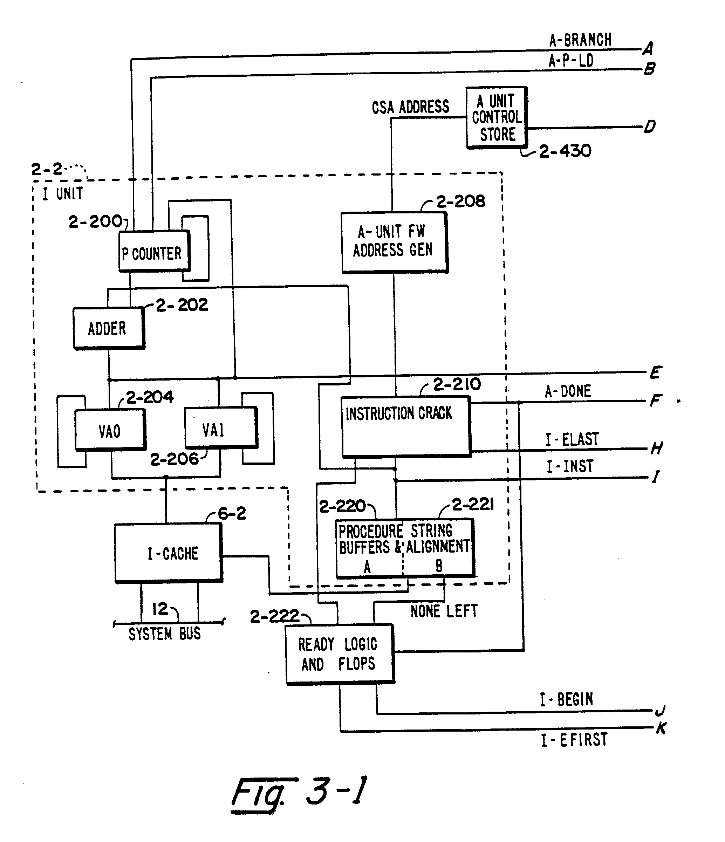

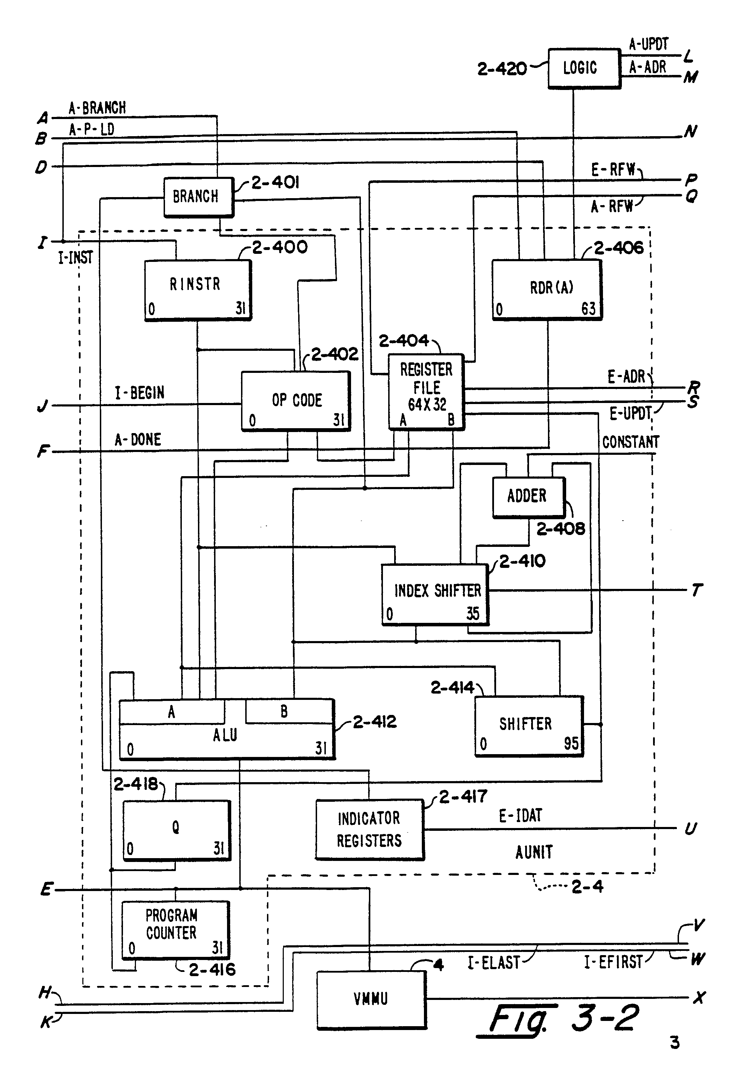

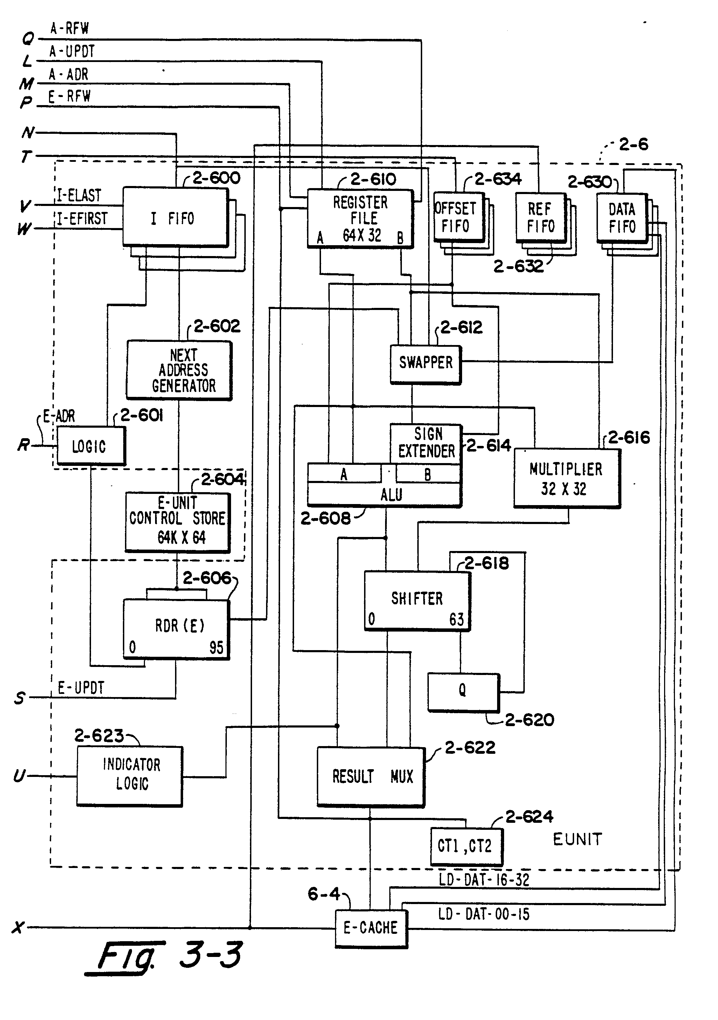

Figure 3 shows in greater detail the elements of the instruction unit 2-2, the A unit 2-4, the execution unit 2-6 and their respective interconnections. The P-counter 2-200 of the instruction unit 2-2 is loaded by the A unit 2-4 with a virtual address. This virtual address is the address in I-cache 6-2 of the location of the next instruction that is to be placed into the pipeline. During the I-FETCH cycle, the virtual address is transferred to I-cache 6-2 via an adder 2-202 and either a register VA0 2-204 or a register VA1 2-206. Either register VA0 2-204 or register VA1 2-206 is used until a branch instruction is fetched. Then, if register VA0 2-204 is active, the address called for by the branch instruction would be stored in register VA1 2-206.

The reason the branch address is held separately in the P counter 2-200 and the program counter 2-416 registers is because if it is a conditional branch, the condition may or may not be met. If the condition is not met, then no branch will result. This gives the system the choice of either using or not using the address called for by the branch. The P counter 2-200, under firmware control, is incremented by one for one word instruction, incremented by two for a double word instruction, or replaced by a branch address from the A unit 2-4.

The instruction is read out of I-cache 6-2 into either string buffers A 2-200 or string buffers B 2-221. Here again, one set of string buffers receives successive instructions from I-cache 6-2 until there is a branch instruction. Then the instruction following the branch instruction is stored in buffers in the other string. For example, if the string buffers A 2-220 were being used then the instruction following the branch instructions would be stored in the string buffers B 2-221. The throughput is improved by storing both sets of instructions in case the branch conditions are met and the I unit 2-4 fetches the branch string from string buffers B 2-221.

The instruction is then sent to the instruction crack logic 2-210 which determines the kind of instruction it is. That is, if this is a software visible register to register instruction, then it will be executed by the A unit 2-4 if it is a memory instruction that will be executed by the E unit 2-6.

The instruction is sent from the crack logic 2-210 to an A-unit firmware address generator 2-208 which addresses an A-unit control store 2-430. The contents of the addressed location is stored in an RDR (A) register 2-406 in the A unit 2-4. The instruction signals I INSTR 0-31 from the string buffers 2-220 or 2-221 are transferred to the instruction (RINSTR) register 2-400 in the A unit 2-4. If the instruction is to be executed by the E unit 2-6 it is also stored in an instruction first in a first out register (FIFO) 2-600 in the E unit 2-6. The instruction is also stored in an OP-CODE register 2-402 in the A unit 2-4 under control of a signal I-BEGIN from the I-unit 2-4. Both the RINSTR register 2-400 and the OP CODE register 2-402 store double words of 32 bits each. If an instruction requires 2 or 3 double words, then the OP CODE for that instruction remains in the OP CODE register 2-402 while each of the double words of the instruction in turn are stored in the instruction register 2-400.

The output of the OP CODE register 2-402 is used primarily for addressing a register file 2-404 under control of OP CODE and firmware bits stored in the OP CODE register 2-402 and the register RDR (A) 2-406 respectively. The register file 2-404 includes the software visible registers. If the instruction being executed is a memory instruction, then a virtual address is generated and sent to the VMMU 4 via an arithmetic logic unit (ALU) 2-412. Depending upon the instruction being executed by the A unit 2-6, the input to the ALU 2-412 may be applied to the A side, by the RINSTR register 2-400, the OP CODE register 2-402, the register file 2-404 or a program counter 2-416. ALU 2-412 B side inputs are provided by an index shifter 2-410 for index or offset operations, via an adder 2-408 or from register file 2-404. If this is a register instruction, for example, a shift operation of the contents of a software visible register in the register file 2-404, then the output of the register file 2-404 may be applied to the shifter 2-414, be shifted the number of bits specified by the instruction and stored back in the register file 2-404 in the same register from which it was read.

Indicator registers 2-412 contain the program status indicators for certain instructions including branch instructions. The register bits include an overflow indicator (or), a carry indicator (C) of the latest operation designated to offset this bit, a bit test indicator (B) representing the status of the last bit test and an input/output indicator (I) representing the status of the last peripheral interrogate. Also included are indicators greater than (G), less than (L) and unlike signs (U) representing the results of the latest compare.

Similar indicator bits are used for scientific and commercial instructions.

Conditioned branch instructions will therefore test an indicator bit and branch if the condition is true.

4

EP 0 374 830 A2

Other conditioned branch instructions will test the condition of selected software visible registers in the register files 2-404 and 2-610. The OP CODE of the branch instruction will specify the true status of the selected software visible register, namely it is less than ZERO, greater than ZERO, equal to ZERO, less, non or equal to ZERO, odd, or even.

The branch instruction types include short displacements of up to 16 bits, a big displacements of 30 bits. The branch instruction may be an unconditional branch type or a conditional branch type. The I unit 2-2 will generate the branch address for all short displacement branch instructions It does this by adding the contents of the displacement field which is in the string buffers 2-220 or 2-221 to the contents of the P counter 2-200 by means of the adder 2-202.

The branch stream is read from I-cache 6-2 into the string buffers 2-220 or 2-221.

If the branch instruction specifies an unconditional branch then the I unit 2-2 executes the branch instruction and begins cracking the next instruction in the branch instruction stream.

If the branch instruction is a conditional branch instruction then the I unit 2-2 waits for the A unit 2-4 to make the decision on which instruction stream the I unit 2-2 will crack. Signals from OP code 2-402, register file 2-404 and the indicator register 2-417 are applied to branch logic 2-401. RDR(A) 2-406 generates signal A-P-LD then the branch address signals from the ALU 2-412 are loaded into the P counter 2-200 and Branch Logic 2-401 generates from bit positions 46 - 50 or hexadecimal 07. Signals A-BRANCH and A-P-LD are applied to P COUNTER 2-200, the A-BRANCH signal is generated from OP CODE register signals specifying the kind of branch, the status of specified indicator register 2-417 bits and the status of certain software visible registers from the register file 2-404. If both signals are true the I unit 2-2 starts cracking the instructions in the branch instruction stream. If signals A-P-LD is true and A-BRANCH is false the I unit 2-2 continues cracking the original instruction stream.

If in the I unit 2-2, the instruction calls for a branch and has a displacement, then the displacement from the crack unit 2-210 is applied to the adder 2-202 to be added to the contents of the P counter 2-200 and stored in either register VA0 2-204 or register VA1 2-206 and applied to the I-cache 6-2.

When the A unit 2-4 has completed the execution of the instruction, an A-DONE signal is sent to the crack logic 2-210 of the I unit 2-2. This informs the I unit 2-2 to send the next instruction stored in the string buffers 2-220 or 2-221 to the A unit 2-4 and if required, to the E unit 2-6. If an instruction calls for execution by the E unit 2-6, then the I unit 2-2 sends that instruction to the instruction FIFO 2-600 under control of signal I-E-LAST and signal I-E-FIRST. These signals control the loading of the instruction FIFO 2-600.

The boolean expressions describing the signals appear in the appendix and should be referenced where appropriate. The I-BEGIN signal is received by the A unit 2-4 when the CRACK signal is generated, the system is not in a hold mode and no logic block including the clock logic is in a stall mode.

The CRACK signal is generated when the ready logic and flops 2-222 is ready to crack the instruction, the string buffers A 2-220 or string buffers B 2-221 store at least one instruction, and the A unit 2-4 had generated the A DONE signal indicating that the A unit is available for processing the next instruction.

The I unit 2-2 generates the I-EFIRST and the I-ELAST signals by the ready logic and flops 2-222 if the instruction being cracked is to be executed by the E unit 2-6. Both signals are applied to the I FIFO 2-600. The I-EFIRST signal enables the I-FIFO 2-600 to store a double word instruction. The I-ELAST signal enables the I-FIFO 2-600 to store a single word instruction.

Note that the I unit 2-2 sends the instruction to be executed in the A unit 2-4, and only to FIFO 2-600 if the instruction is to be executed in the E unit 2-6. In the E unit 2-6, the next instruction the FIFO 2-600 will execute is applied to the next address generator 2-602 which generates the E unit control store 2-604 address location. The firmware word is stored in a register RDR (E) 2-606. The instruction FIFO 2-600 stores up to four instructions.

When the A unit 2-4 sends its virtual address to the VMMU 4, the VMMU 4 generates the physical address which addresses the E-cache 6-4. The contents of the addressed location is stored in a data FIFO 2-630 in the E unit 2-6 by signal LD-DAT 1631 for a single word transfer or for a double word transfer. Signal LD-DAT-0015 also increments by one the FIFO 2-630 write address to accept the next transfer. This data is the operands on which the instruction will operate. The E-unit 2-6 executes instructions whose operands are stored in software visible registers of register file 2-630.

During the execution of an instruction by E unit 2-6, the indicator status may be changed by indicator logic 2-623 generating signals E-IDAT 0-8 update the indicator registers 2-417 in the A unit 2-4.

For certain instructions, that are executed by the E unit 2-6 that do not require operands, the A unit 2-4 generates a dummy cycle by sending the virtual address, hexadecimal 40, to the VMMU 4. This results in the E-CACHE 6-4 generating a dummy cycle by sending signals LD-DAT 1631 to the FIFO 2-630 with a "dummy" operand.

A multiplier 2-616 is coupled to the A & B ports of register file 2-610 to generate and store partial

5

products in conjunction with the shifter 2-618 and the Q-register 2-620. The partial products are applied to a result multiplexer (MUX) 2-622 and stored in accumulator location in register file 2-610. When the multiplication is completed the final result is stored in one of the software visible registers of register file 2-610.

Swapper logic 2-612 receives operands from the B side of register file 2-610 for swapping words within double words and swapping bytes within single words. A 16 bit word is made up of two 8-bit bytes. A double word is made up of two 16-bit single words or four 8-bit bytes. A sign extender 2-614 repeats the sign of all the high order positions of a double word to the left of the first significant bit of the double word.

The CTI and CT2 counters 2-624 are used in the calculation of the exponent of a floating point resultant. A mantissa of a floating point operand is processed through the ALU 2-608 and a shifter 2-618. These are performed in a conventional manner.

The software visible registers in both the register files 2-404 with A unit 2-4 and 2-610 in the E unit 2-6 are updated on successive cycles so that they both contain the same information. This is accomplished by firmware signals from register RDR (A) 2-406 which are applied to logic 2-420 to generate an update signal A-PUDT which enables the register file 2-610 and 6 A-ADR signals which are applied to the address terminals of register file 2-610 to store the data from the D terminal of the register file 2-404 to the D terminal of register file 2-610. Similarly, the E-UPDT signal from register RDR (E) 2-606 enable register file 2-404 to store the data at the address specified by signals E-ADR from logic 2-601. Logic 2-601 generator signals E-ADR from instruction signals from the instruction FIFO 2-600 and firmware signals from RDR (E) 2-606.

The A unit 2-4 program counter 2-416 stores the address of the next instruction. P counter 2-200 in the I unit 2-2 also stores the address of the next instruction. The reason for the two registers is that, in case of a conditional branch, P counter 2-200 in the I unit 2-2 stores the branch address in case it is to be used, whereas the program counter 2-416 will not store the branch address but stores the next address in the sequence presently being executed.

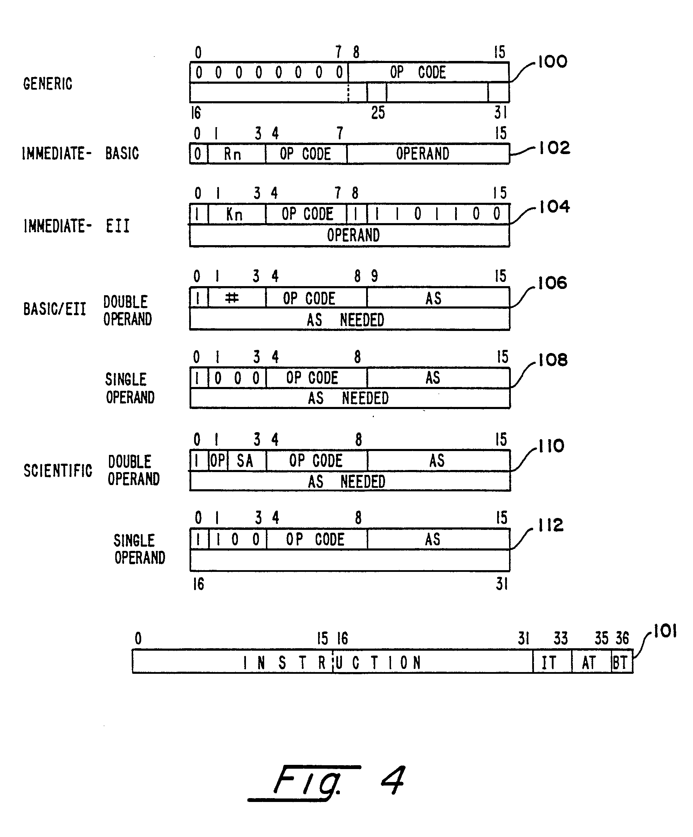

Figure 4 shows the formats of the types of instructions which are executed by the E unit 2-6.

A generic instruction 100 includes a first word made up of bit positions 0 through 7 at binary ZERO and bit positions 8 through 15 containing the OP CODE. Typical generic instructions include, but are not limited to a Halt instruction, a Breakpoint instruction, Real Time Clock On and Off instructions, and a Memory to Memory Move instruction.

Also included as a generic instruction 100 are a number of instructions to allow the programmer to build and control a software stack. The stack could be used typically for storing software procedures. The stack instructions include a Load Stack Address Register (LDT) instruction, a Store Stack Register (STT) instruction, an Acquire Stack Space (ACP) instruction, and a Relinquish Stack Space (RLQ) instruction. Bit positions 8 through 15 of a second word of generic instruction 110 specifies the stack instruction.

A Basic Immediate instruction 102 specifies in bit positions 1 through 3, one of seven software visible R registers, an operand in bit positions 8 through 15 and the OP CODE in bit positions 4 through 7.

The R registers are in register files 2-404 and 2-610. The OP CODE indicates the operation the system will perform between the specified R register and the operand. Typical Basic Immediate instructions load the operand into R, compare the value in R with the operand, add the operand to the value in R and multiply the operand by the value in R.

An extended Integer Instruction (EII) set includes an EII immediate instruction format, a single operand format and a double operand format. The EII instructions provide access to seven 32 bit software visible integer register (K1 through K7) in register files 2-404 and 2-610 as well as the use of a data descriptor to define the operand.

The Immediate EII instruction 104 includes in bit positions 1 through 3 of the first word, one of the seven K registers K1 through K7. The OP CODE is specified by bit positions 4 through 8. Bit positions 9 through 15 include an EII address syllable, hexadecimal EC. A second word contains a 16 bit operand. Typical Immediate EII Instructions load the operand into the specified K register, compare the value in the specified K register with the operand, or add or multiply the operand by the value in the K register. Bit position 0 at logical 0 identifies the Basic Immediate instruction 102 does not require an address syllable while bit position 0 at logical ONE identifies the EII Immediate instruction 104 as having an address syllable.

The Basic and EII Double Operand Instruction 106 have the following formats as defined by the address syllable AS in bit positions 9 through 15. The instruction formats are:

register AS (RAS)
Immediate Operand (IMO)
Memory AS (MAS)

The following types of instruction are available: software visible base register instructions, software

6

visible word operand R register instructions, byte instructions and bit instructions.

Bit positions 1 through 3 selects one of the software visible registers. The type of software visible register is a function of the OP CODE, bit positions 4 through 8.

Typical Basic Double Operand instructions are Load Register B, Store Register B, Load Register R, Store Register R, Add to Register R, Subtract from Register R, Multiply Register R, Divide Register R, Half word Load Register R, Half word Store Register R, Half word OR with Register R, and Half word AND with Register R. A second word could typically define additional characteristics of a second operand.

In a similar fashion the EII double operand instructions access the seven software visible 32 bit integer registers K1 through K7 and use a data descriptor to define the second operand. Typical EII double operand instructions are Load Register K, Add to Register K, Subtract from Register K, Multiply Register K and Divide Register K.

The Basic and EII single operand instructions 108 include logical ZEROS in bit positions 1 through 3 of the first word of the format.

Typical Basic Single Operand Instructions 108 modify operands, process binary bits and provide control instructions. These include Increment, Decrement, Negate, Clear, Jump, Enter, Load Bit, Load Bit and Set False and Load Bit and Set True.

Typical EII Single Operand instructions 108 each of which includes the Data Descriptor are increment, Decrement, Negate and Complement.

The Scientific Double Operand instructions 110 and the Scientific Single Operand instructions 112 include an OP CODE in bit positions 4 through 8 and an address syllable in bit positions 9 through 15. In addition the Scientific Double Operand instruction 110 includes an OP CODE bit in bit position 1 and the identification of one of the three 64 bit scientific accumulators in register files 2-404 and 2-610.

Typical Scientific Double Operand instructions 110 are Scientific Load, Scientific Compare, Scientific Add, Scientific Multiply, Scientific Store and Scientific Swap. A scientific accumulator is used in the execution of each instruction. The length of each operand is specified by the contents of a software visible M4 register. The length of the memory field and length of the operand in each scientific accumulator is specified as a two or a four word operand. The M4 register also specifies a Round or Truncate mode.

Scientific Single Operand instructions 112 include binary 100 in bit positions 1 through 3. Note that Basic/EII Single Operand instructions 112 include binary 000 in bit positions 1 through 3. Typical Scientific Single Operand instructions include Scientific Compare to ZERO - 2 words, Scientific Negate - 2 words, Scientific Compare to ZERO - 4 words and Scientific Negate - 4 words.

The I-FIFO 2-600 receives the format 101 which includes the 32 bit instruction and five bits which are appended to the instruction by the I unit 2-2. Bit position 32 and 33 specify the instruction type (IT). Bit positions 34 and 35 specify the address syllable type (AT). Bit position 36 specifies a Bit instruction type (BT). The following table specifies the instruction type.

TABLE I

| INSTRUCTION TYPE (IT) | BIT POSITIONS | |
|---|---|---|
| | 32 | 33 |
| Basic | 0 | 0 |
| Extended Integer (EEI) | 0 | 1 |
| Immediate (IMM) | 1 | 1 |
| Scientific (SIP) | 1 | 0 |

The following table specifies the addressing syllable type:

TABLE 2

| ADDRESS TYPE (AT) | BIT POSITIONS | |
|---|---|---|
| | 34 | 35 |
| Register Address Syllable (RAS) | 0 0 | |
| K Register n (Kn) | 0 | 1 |
| Memory Address Syllable (MAS) | 1 0 | |
| Immediate Operand (IMO) | 1 | 1 |

The Bit Instruction Type (BT), bit position 36 at logical 1 specifies an A Indexed and mask instruction and at logical 0 specifies all other types of instructions.

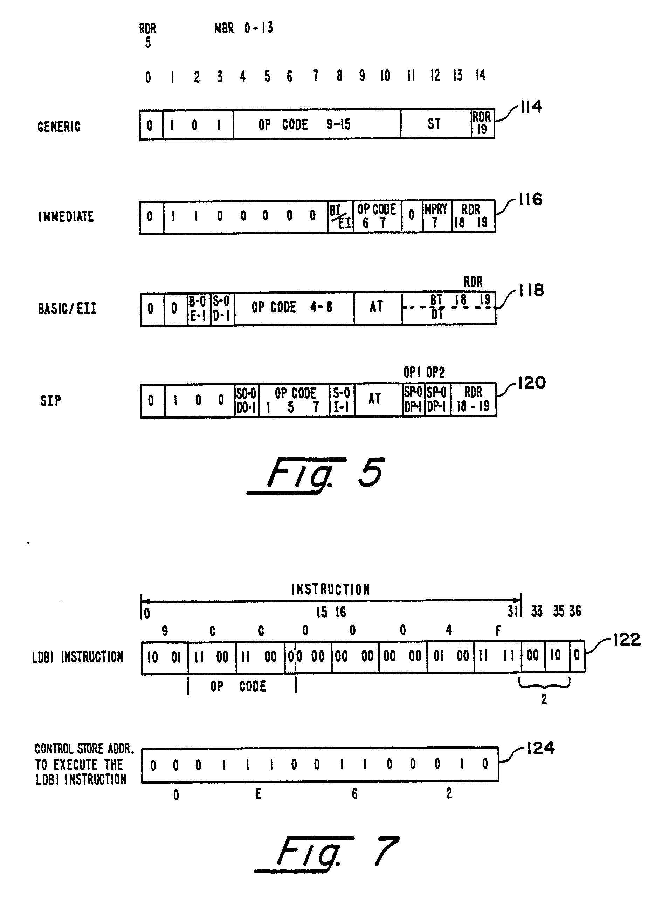

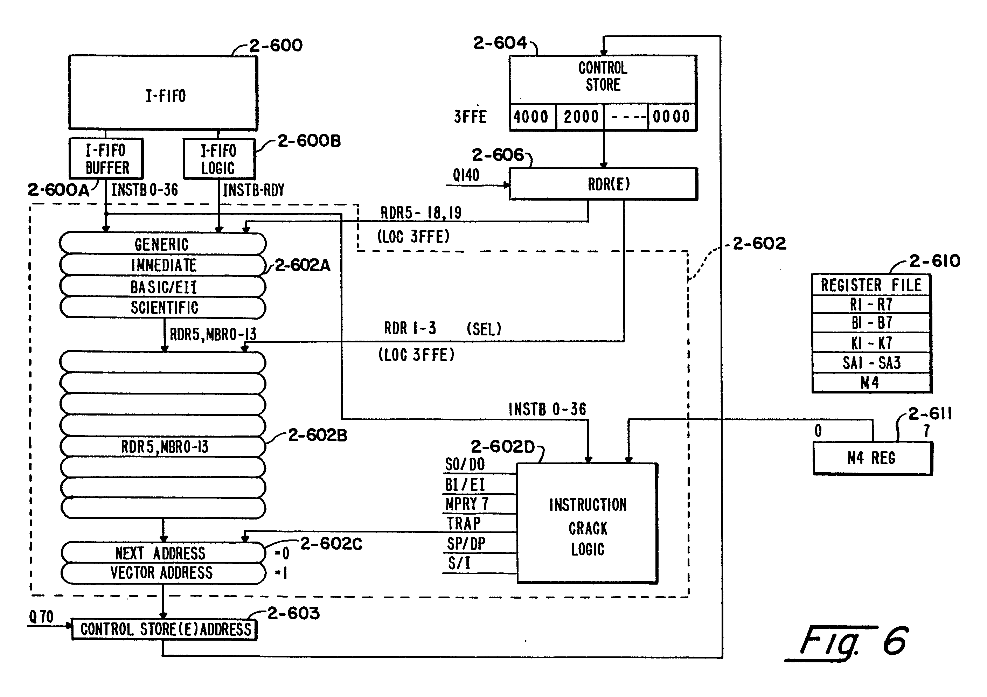

Figure 5 shows the branch address stored in a control store (E) address register 2-603 (Figure 6) for each type of instruction. Contents of register 2-603 includes the state of signal RDR 5 in bit position 0 at logical ZERO and signals MBR 0 through 13 in bit positions 1 through 14. The contents of register 2-603 addresses control store 2-604 to read out the firmware word and store it in the RDR (E) register 2-606. The firmware word controls the execution of the instruction by the E unit 2-6.

Four types of control store 2-604 branch addresses are developed for the instruction formats of figure 4. Included are a Generic instruction format 114, an Immediate instruction format 116, a Basic/Ell instruction format 118 and a Scientific instruction format 120.

The branch address formats are developed as follows. If bit positions 32 and 33 of extended instruction 101 have a value of decimal 2 then the SIP format 120 is developed.

In general if bit positions 0 through 3 of the instructions have a hexadecimal value of from 9 through F then a double operand instruction format is specified. SIP instructions have a hexadecimal value of 9 through B or D through F for double operand instructions.

If bit positions 32 and 33 have a value of decimal ONE then the Ell format is specified. Bit positions 32 and 33 at decimal 3 specify the IMM format. If neither the Ell, IMM or SIP formats are specified then the Generic format 100 is specified.

The Generic format 100 includes ZEROS in bit positions 0 through 7 and the OP CODE in bit positions 8 through 15. The OP CODE appears in bit positions 4 through 10 of the generic instruction 114. The stack instructions, STT, LDT, RLQ and ACQ are specified in the ST field, bit positions 11 through 13. The ST bit configurations are decoded from stack instruction information in bit positions 25, 26, 27, 29, 30 and 31 of the generic instruction 100. The low address bit of the branch address, signal RDR 19, is specified in bit position 14.

The branch address format to execute the immediate Basic Instruction 102 and the Immediate Ell Instruction 104 is specified by the Immediate format 116. Bit Position 0 specifies the ZERO state of signal RDR 5. Bit positions 1 through 7 specify a constant, binary 1100000. Bit position 8 specifies a logical ZERO for the Basic Immediate instruction 102, and a logical ONE for the Ell Immediate instruction 104. Bit positions 9 and 10 specify the OP CODE shown in bit positions 6 and 7 of instructions 102 and 104. Bit position 11 specifies a logical ZERO. Bit position 12, MPR Y7 is at logical ONE for the Multiply for Value Instruction when the bit positions 1 through 3 of the instruction 102 specifies software visible register R7 and the double precision product is loaded into software visible registers R6 and R7. Bit positions 13 and 14 specify the states of signals RDR 18 and 19 which are the two low order branch address bits.

The Basic /Ell format 118 develops the branch address for the Basic /Ell Single Operand and Double Operand instructions 108 and 106 respectively. Bit position 0 specifies the state of signal RDR 5 at logical ZERO. Bit position 1 is at logical ZERO. Bit position 2 at logical ZERO specifies the Basic instructions and at logical ONE specifies the Ell instructions, Bit position 3 at logical ZERO specifies the Single Operand instruction and at logical ONE specifies the Double Operand instruction. Bit positions 4 through 8 specify the OP CODE from bit positions 4 through 8 of the instructions 106 and 108.

Bit positions 9 and 10 specify the address syllable from bit positions 34 and 35 of the extended instruction 101.

For the Ell instructions 106 and 108, bit positions 11 through 14 specify the data type. Bit positions 4 through 7 of the descriptor word (not shown) which specify the operand as signed or unsigned, half word or word or unsigned or double word. Make up the data type.

For the Basic instructions 106 and 108, bit position 12 specifies BT, bit position 36 from the extended

8

instruction 101. Bit positions 13 and 14 specify the state of signals RDR 18 and 19, the low order branch address bits.

The Scientific Single Operand and Double Operand instructions 112 and 110 respectively develop the SIP format 120. Bit position 0 specifies the state of signal RDR 5 at logical ZERO. Bit positions 1 through 3 specify the constant octal 4. Bit position 4 at logical ONE specifies the SIP double operand instruction. Bit positions 5 through 7 specify the OP CODE from bit positions 1, 5 and 7 of instructions 110 and 112. Note that bit position 1 of instruction 112 is a constant. Bit position 8 at logical ZERO specifies a scientific accumulator (floating point) operation and, at logical ONE specifies an integer operation. Bit positions 9 and 10 specify the address syllable type from bit positions 34 and 35 of the extended instruction 101. Bit position 11 at logical zero specifies that scientific operand 1 is single precision (double word) and bit position 11 at logical one specifies that scientific operand 1 is double precision (quad word). Bit position 12 at logical ZERO specifies that scientific operand 2 is single precision (double word) and bit position 12 at logical ONE specifies that scientific operand 2 is double precision (quad word). Bit positions 13 and 14 the two low order branch address bits specify the state of signals RDR 18 and RDR 19.

Figure 6 is a block diagram of the logic for generating the control store 2-604 branch address for selecting the firmware word for executing the specified instruction.

The software visible register R1 through R7, B1 through B7, K1 through K7, Scientific Accumulators 1 through 3, and the M registers are stored in register file 2-610.

Instructions 101 are stored in the (4 by 37 bits wide) I-FIFO 2-600. The "first in" instruction is stored in an I-FIFO Buffer 2-600 A. I-FIFO logic 2-600B generates a FIFO ready signal INSTB-RDY which with the instruction signal INSTB 32 through 36 and INSTB 0 through 15 and the firmware signals RDR 5, 18, 19 generate the Branch address RDR5, MBR 0-13 in a switch 2-602A. The branch address is applied to a switch 2-602B. Signals RDR 1-3 select the RDR5, MBR0-13 branch address which is applied to a switch 2-602C.

The branch address is stored in control store address register 2-603 which is applied to control store 2-604.

An instruction crack logic 2-602D receives the instruction signals INSTB 0 through 36 and signals from the M4 hardware register 2-611. The single operand/double operand (S/O) signal is generated for the Basic/EII format 118 if the value of INSTB 0 through 4 of the instruction is hexadecimal 9 through 15. The EII signal is generated if the value of INSTB 32 and 33 equals decimal ONE. The signal MPR Y7 is generated by decoding the basic multiply instruction OP CODE. The single precision/double precision (SP/DP) signals are generated for the scientific accumulator (SA1 through SA3) specified by the contents of the M4 register. The scientific operand/integer operand (S/I) signal is generated if the second operand is read from one of the software visible registers R4 through R7 or K1 through K7. If R7 is selected then R6 is concatenated with R7 to select the integer.

Assuming that there are no other instructions in the FIFO 2-600 then the contents of location hexadecimal 3FFE are stored into the RDR(E) register 2-604 at the conclusion of the execution of each instruction as binary hexadecimal 4000 2000 ........ 0000 RDR1 is at logical ONE and RDR2 and 3 are at logical ZERO. This selects the RDR5, MBR 0-13 switch position. Also, RDR5 is at logical ZERO, RDR18 is at logical ONE and RDR19 is at logical ZERO. RDR18 and 19 are the two low order branch address bits for the Basic format 118, the Immediate format 116 and the SIP format 120. RDR19 is the low order branch address bit for the Generic format 114. When operating in a production line mode, the same fields described above generates the starting address of the next instruction during the execution of the last field of the micro word of the current instruction.

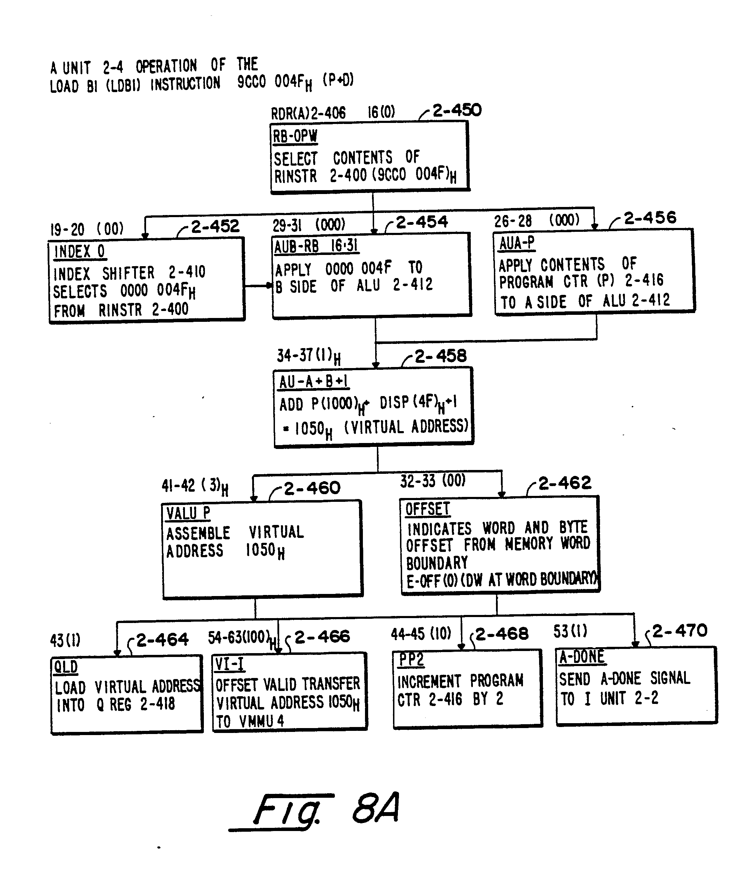

Figure 7 shows the generation of the central store address 9000 0049 to execute a Load B1 Instruction 122, hexadecimal 9CC0UP0049. In the Load B1 instruction, the virtual address is generated by adding the contents of the program counter 2-416 to the operand value in bit position 16 through 31 of the load B1 instruction 122. The sum is applied to the VMMU 4 is converted to a physical address of a location in E-CACHE 6-4 which contains the operand which is loaded into software visible register B1 of register files 2-404 and 2-610. Bit positions 32 and 33 at binary 00 specify that the Load B1 Instruction 122 has the Basic format 118. Bit positions 0 and 1 of branch address 124 are a constant binary 00. Bit position 2 is at binary 0 since bit positions 32 and 33 are binary 00. Bit position 3 is at binary 1 since bit positions 0 through 3 of instruction 122 are at hexadecimal 9 which specifies a double operand. Bit positions 4 through 8 of the branch address 124 specify the OP CODE in bit positions 5 through 9 of instruction 122. Bit positions 9 and 10 specify the address syllable type in bit positions 34 and 35 of the instruction 122. Bit positions 11 and 12 specify a value of binary ZERO for the BT field of instruction 122. Bit positions 13 and 14 specify the value of signals RDR18 and 19 at binary 10. The control store branch address 124 therefore is hexadecimal OE62.

9

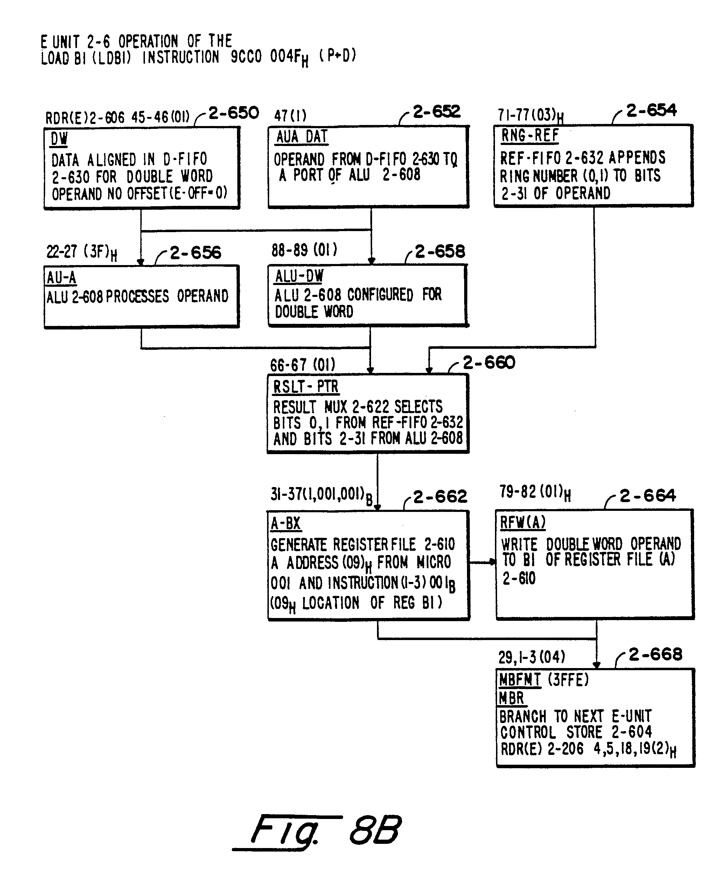

Figures 8A and 8B show in block diagram form the firmware steps taken by the A unit 2-4 and the E unit 2-6 respectively in executing the Load B1 instruction of Figure 7.

Each block shows the firmware bits and their values in the RDR (A) 2-406 or the RDR E 2-606 registers. The neumonic recognized by the firmware is shown underlined within the block, as well as the function performed by the block.

As an example block 2-458 of Figure 8A shows that bits 34 through 37 of register RDR (a) 2-406 have a value of hexadecimal 1 (binary 0001). The function performed is to add the value of the A input AL02-412 to the value at the B input of ALU 2-412 to plus ONE to generate the virtual address.

Referring to Figure 8A, the A unit 2-4 generates the virtual address of the operand, sends it to the VMMU4, and notifies the I unit 2-2 that the A unit 2-4 has completed its portion of the load B1 instruction.

All of the firmware steps are completed in one cycle. The firmware blocks are shown approximately in the order in which they are executed.

As seen from block 2-450, bit 16 of the RDR(A) register 2-406 is at binary 0. The micro operation RB-OPW transfers the contents of the RINSTR register 2-406, hexadecimal 9CC0 004F to block 2-452.

Block 2-452, MICRO INDX 0 (bits 10 and 20 of RDR (A) 2-406 are at binary 00) selects the right word of the instructions, hexadecimal 0050, and block 2-454, micro AUB-RB 16:31 (bits 29-31 at binary 0) applies the right word to the B input of ALU 2-412.

Block 2-456, MICRO AUA-P (bits 26-28 a binary 0) applies the contents of the program counter 2-416, hexadecimal 1000, to the A input of ALU 2-412.

Block 2-458 MICRO AU-A+B+I (bits 34-37 at hexadecimal 1) generates the virtual address hexadecimal 1050 (1000 + 4F + 1) in the ALU 2-412.

Block 2-460, MICRO VALU-P (bits 41-42 at hexadecimal 3) selects the virtual address from the ALU 2-412 by a MUX (not shown).

Block 2-462, MICRO OFFSET (bits 32-33 at binary 0) tests that the operand in the E cache 6-4 appears at a word boundary. Otherwise the firmware would call for two E cache cycles to read out the contents of the two double word storing the operand. E-OFF is therefore binary 0. The E-OFFSET is applied to the offset FIFO 2-634 from the index shifter 2-410.

Block 2-464, MICRO QLD (bit 43 at binary 1) loads the virtual address into the Q register 2-418 as a backup.

Block 2-468, MICRO PP2 (bits 44-45 at binary 10) increments the program counter 2-416 and in turn the P counter 2-200 in the I unit 2-2 to read the next instruction from I cache 6-2.

Block 2-470, MICRO A-DONE (bit 53 at binary 1) sends the A-DONE signal to the I unit 2-2. The I unit then sends the next instruction to the A unit 2-4.

Referring to Figure 8B, the E unit 2-6 completes the execution of the LDBI instruction by receiving the operand from the E cache 6-4 and storing it in B1 of register file 2-610.

Block 2-650 shows that bits 45-46 of the RDR(E) register 2-606 are at binary 01. The MICRO DW aligns the double word operand in D FIFO 2-630. E-OFF at binary 0 indicates no offset.

Block 2-652, MICRO AUA DAT (bit 47 at binary 1) transfers the operand from D FIFO 2-630 to the A input of ALU 2-608.

Block 2-658, MICRO ALU-DW (bits 88-89 at binary 01) configures ALU 2-608 to process the operand as a double word.

In block 2-660, MICRO RSLT-PTR (bits 66-67 at binary 01) the REUSLT MUX 2-622 selects the maximum value of bits 0 and 1 of the operand and the ring number from REF-FIFO 2-632 and bits 2-31 of the operand from the ALU 2-608.

Block 2-662 MICRO A-BX (bits 31-37 at binary 1, 0010 001 generates the register file 2-610 A address of B1, hexadecimal 09, from bits 001 from the firmware word and bits 1-3 from the instructions word.

Block 2-664 MICRO RFW(A) (bits 79-82 at hexadecimal 01) writes the double word operand to B1 of register file 2-610 from the RESULT MUX 2-622.

Block 2-666, MICRO DONE (bit 63 at binary 1) sends the E-DONE signal to the I unit 2-2 which resets the instruction crack logic 2-210 associated with the Load B1 instruction.

Block 2-668, MICRO MBFMT MBR (bits 29, 1-3 at hexadecimal 04) branches to the starting address of the next instruction if present or to address hexadecimal 3FFE if the next instruction is not present. The address selected will load the next E unit control store 2-604 location and loading RDR(E) 2-606 with the next firmware word.

APPENDIX A

The neumonics of the instructions are shown in the following document which is commercially available from Honeywell Bull Inc., Hardware Version of DPS6 Programmers Pocket Guide CU75-02 (Aug. '84). The notations in the boolean equations are as follows:

EQ 0100 EQUAL TO HEXADECIMAL 0100

GT 3 GREATER THAN HEXADECIMAL 3

EQ 2 NOT EQUAL TO HEXADECIMAL 2

NLT 018 NOT LESS THAN HEXADECIMAL 018

NGT 01E NOT GREATER THAN HEXADECIMAL 01E

LT 3 LESS THAN HEXADECIMAL 3

The I-BEGIN signal is generated by the boolean equation:

I-BEGIN = CRACK & ^STALL & ^HOLD

CRACK = READY & ^NONELEFT & ADONE

The ^ signifies a negated signal, i.e. ^HOLD should be read as the "NOT HOLD" signal.

The boolean equation for the I-EFIRST and I-ELAST signals are:

I-EFIRST = CRACK & ^STALL & EINSTR

I-ELAST = I-EFIRST (^MSK + (SIZE EQ 2) + BII) + (^HOLD & MSK&^EII& CRACK & ^STALL & NOTSTO & RSIZE EQ 2)

The boolean equation for Signal EINSTR is generated as a function of combinations of bits of the different types of instructions that require execution by the E unit 2-6. The boolean equation is:

EINSTR = GCS + (IO + IOLD + SC + MASK + BIT4 + LB LEV + INCDEC & ^RAS + MTM + MUL + DIV + STM + SSBP) & ^EII + (BSTORE + EBIMO) & IMO + EMSK & EII + MLV & (SI + ESI & EII1) + (ESO + EDO) & (^ERAS&(EII1 + EII23) + AS3EII45) + EEII & (EII1 + EII23) + (SDO + SO) & ^RAS & ^IMO & ^EII

## DESCRIPTION OF EQUATION TERMS

## GENERIC, COMMERCIAL, OR SCIENTIFIC INSTRUCTIONS

GCS = I-INST (0-8) EQ O;

## IO INSTRUCTION

IO = (I-INST (0-8) EQ 0100)

## IOLD INSTRUCTION

IOLD = I-INST (0-8) EQ 0103

## SINGLE OPERAND INSTRUCTION

SO (I-INST (0-3) EQ 8 & ((I-INST (4-8) EQ 1) + (I-INST (4-8) GT 3))

## SINGLE OPERAND INSTRUCTION THAT USES B REGISTERS IN THE E UNIT 2-6

SSBP = I-INST (0-8) EQ 0106

## SINGLE OPERAND INSTRUCTIONS THAT USE OVERFLOW: (NEG, CAD, AID, SID, INC.,DEC. INSTRUCTIONS)

SOV SO & ((I-INST (4-8) EQ 4) + (I-INST (4-8) EQ 01D) + (I-INST (4-7) EQ 4)) + INCDEC

## LB INSTRUCTION

LB = SO & (I-INST (4-8) EQ 05)

BIT INSTRUCTIONS (LBF, LBT, LBC, LBS)

BIT4 = (I-INST (0-5) EQ 022) & (I-INST (8) EQ 0)

BASIC DOUBLE OPERAND OR SCIENTIFIC INSTRUCTIONS

SDO = (I-INST (0-3) GT 8) & (I-INST (4-8) NEQ 2)

BASIC INSTRUCTIONS WITH IN-LINE MASK WORD: (SRM, NSAVE, NRSTR, SAVE, RSTR)

MASK = (I-INST (0) EQ 1) & (RLBP NEQ ) & (I-INST (4-8) EQ 015) + (I-INST (0-7) EQ 085) + (I-INST (0-7) EQ 08F)

SCIENTIFIC SINGLE AND DOUBLE OPERAND INSTRUCTIONS

SC = ((I-INST (0-3) GT 8) & ((I-INST (4-8) EQ 011) + (I-INST (4-8) EQ 013 + (I-INST (4-8) EQ 018) + (I-INST (4-8) EQ 01A))) & ^EII1 & ^EII23 & ^AS3EII45

DOUBLE OPERAND INSTRUCTIONS THAT USE M REG AND DON'T STOP PIPELINE

STM = (I-INST (O) EQ 1) & (RLBP NEQ 0) & (I-INST (4-8) EQ OE)
WHERE RLBP = I-INST (1-3)

MULTIPLY INSTRUCTION

MUL = (I-INST (0) EQ 1) & (RLBP NEQ 0) & (I-INST (4-8) EQ 016)

DIVIDE INSTRUCTION

DIV (I-INST (0) EQ 1) & (RLBP NEQ 0) & (I-INST1 (4-8) EQ 06)

MODIFY OF TEST REGISTER M INSTRUCTION

MTM = (I-INST (0-3) GT 8) & (I-INST (4-8) EQ 0)

(INSTRUCTIONS THAT STOP PIPELINE IF THEY INCLUDE AN IMMEDIATE OPERAND (IMO)NEG, SSBP, CPL, CALL, CL, CLH, LBF, DEC, LBT, LBS, INC, LBC, STS, SDI, CAD (ALSO LE) STM, STH, SRM, SWR, SWB, STR, STB, ARE SO, DO

BSTORE = SO & ((I-INST(4-8) EQ 4) + (I-INST(4-8) EQ 6) + (I-INST(4-6) EQ 3) + (I-INST(4-7) EQ OA) + (I-INST(4-7) EQ 8) + (I-INST(4-8) EQ 018) + (I-INST(4-8) EQ 01A) + (I-INST(4-7) EQ OE)) + BIT4 + SDO & ((I-INST(5-7) EQ 7) + (I-INST(4-8) EQ 015) + (I-INST(4-6) EQ 7))

SHORT VALUE IMMEDIATE INSTRUCTION

SI = (I-INST(0).EQ.0) & (RLBP.NEQ.O) & (I-INST(4-7).GT.OB)

IMO INSTRUCTIONS THAT USE B REG IN E UNIT 2-6 (LDB, LAB, STB, SWB)

EBIMO = (I-INST(0-3) GT 8) & ((I-INST(4-8) EQ 019) + (I-INST(4-8) EQ 017) + (I-INST(4-8) EQ 01D) + (I-INST(4-8) EQ 01F))

LEV INSTRUCTION

LEV = SO & (I-INST(4-8) EQ 01C)

INC AND DEC INSTRUCTIONS

INCDEC = SO & ((I-INST(48) EQ 011) + (I-INST (4-8) EQ 015))

MLV OR MLVK INSTRUCTION

MLV = I-INST(6-7) EQ 3

EXTENDED INTEGER SINGLE OPERAND INSTRUCTION

ESO = (I-INST(0-3) EQ 8) & (I-INST(4-8) NLT 018) & (I-INST(4-8) NEQ 01B) & (I-INST(4-8) NGT 01E)

EII SO THAT USE OVERFLOW & DON'T STOP PIPELINE: KINC, KDEC, KNEG, KNEGB INSTRUCTIONS

ESOV = ESO & (I-INST(6-7) LT 3) & (I-INST(6-8) NEQ 1)

E11 SHORT VALUE IMMEDIATE INSTRUCTION

ESI = EBK & (I-INST(8) EQ 1)

EXTENDED INTEGER DOUBLE OPERAND INSTRUCTION

EDO = (I-INST(0-3) GT 8) & (I-INST(4-7) NLT 4)

EXTENDED INTEGER INSTRUCTION (EII) INSTR WITH IN-LINE MASK DOUBLEWORD

EMSK = (I-INST(0) EQ 1) & (RLBP NEQ 0) & (I-INST(4-8) EQ OF)
WHERE RLBP = I-INST (1-3)

E11 INSTRUCTIONS EXECUTED IN E UNIT 2-6 THE INSTRUCTION INCLUDES A REGISTER ADDRESS
SYLLABLE (RAS) OR AN (IMO) (KDIV, KMUL, KMULP, KDIVP, KSKM INSTRUCTIONS)

EEII = KDIV + KMUL + KDIVP + KMULP
KDIV = (I-INST(0) EQ 1) & (RLBP NEQ 0) & (I-INST(4-8) EQ 017)
KMUL = (I-INST(O) EQ 1) & (RLBP NEQ 0) & (I-INST(4-8) EQ 01C)
KDIVP = (I-INST(0) EQ 1) & RLBP NEQ 0) & (I-INST(4-8) EQ 0IC)   .
KMULP = (I-INST(0) EQ 1) & (RLBP NEQ 0) & (I-INST(4-8) EQ 01E)
EII1 = I-INST(9-15) EQ 06C
EII23 = I-INST(9-15) EQ 07C
AS3EII45 = I-INST(9-15) EQ 058
RAS = (I-INST(9-11) EQ 5) & (I-INST(12) EQ 0) & (I-INST(13-15) NEQ 0)
IMO = I-INST(9-15) EQ 070
KAS = (I-INST(23-28) EQ 01A) & NC
ERAS = (I-INST(24-28) EQ 01A) & NC
NC = I-INST (29-31) NEQO
II = EII1 + EII23 + AS3EII45

## Claims

1. Apparatus for generating a control store address of a firmware word which executes an instruction in a single cycle of operation, said apparatus comprising:
control store means for storing a starting firmware word and a plurality of firmware words;
register means for storing a plurality of instructions for execution in a first in-first out manner, each of said plurality of instructions including bits specifying an instruction type, an address syllable type, and a bit type;
switching means coupled to said register means and responsive to signals from one of said plurality of instructions specifying said instruction type for selecting one of a plurality of control store address formats;
crack logic means coupled to said register means and said switching means and responsive to signals specifying said one of said plurality of instructions for generating a plurality of signals specifying operand type and instruction type alternatives;

EP 0 374 830 A2

said switching means coupled to said control store means, said register means and said crack logic means and responsive to selected signals from said starting firmword word, said one of said plurality of instructions and said plurality of signals specifying operand type and instruction type alternatives for generating signals representative of one of said plurality of control store address formats;

control store register address means coupled to said switching means for storing said format signals specifying said control store address;

said control store means being responsive to said format signals for reading out said firmware word for executing said one of said plurality of instructions.

2. The apparatus of claim 1 further comprising:

said switching means coupled to said control store means, said register means and said crack logic means and responsive to selected signals from said firmword word. a subsequent one of said plurality of instructions and said plurality of signals specifying operand type and instruction type alternatives for generating signals representative of a subsequent one of said plurality of control store address formats;

control store register address means coupled to said switching means for storing said subsequent format signals specifying a subsequent control store address;

said control store means being responsive to said subsequent format signals for reading out a subsequent firmware word for executing said subsequent one of said plurality of instructions.

3. The apparatus of claim 2 wherein a first control store address format is for a generic instruction.

4. The apparatus of claim 3 wherein a second control store address format is for an immediate instruction.

5. The apparatus of claim 4 wherein a third control store address format is for a Basic. Extended Integer instruction.

6. The apparatus of claim 5 wherein a fourth control store address format is for a Scientific instruction.

7. The apparatus of claim 6 wherein an SO/DO signal of said operand type signals specifies a single or a double operand for a Basic. Ell or a Scientific instruction control store address format.

8. The apparatus of claim 7 wherein a BI/EI signal specifies a Basic or an Ell Immediate instruction for said Basic. Ell instruction control store address format.

9. The apparatus of claim 8 wherein an MPRY 7 signal specifies a Basic Immediate multiply instruction control store address format.

10. The apparatus of claim 9 wherin an SP/DP signal of said operand type signals specifies a single or double precision first or second operand Scientific instruction control store address format.

11. The apparatus of claim 10 wherin an S/I signal of said operand type signals specifies a floating point or integer operand Scientific instruction control store address format.

12. The apparatus of claim 11 wherein said selected signals from said one of said plurality of instructions are OP CODE signals for said formats.

13. The apparatus of claim 12 wherein said selected signals from said one of said plurality of instructions are address syllable type signals for said Basic/Ell and Scientific instruction control store address formats.

14. The apparatus of claim 13 wherein said selected signals from said one of said plurality of instructions are bit type instruction signals for said Basic instruction control store address format.

15. The apparatus of claim 14 wherein said selected signals from said starting firmware word or said starting firmware word are RDR 18 and RDR 19 signals for said Immediate, Basic/Ell and Scientific instruction control store address formats and said RDR 19 signal for said Generic instruction control store address format, said RDR 18 and 19 signals specifying low order bits of said control store address formats.

16. The apparatus of claim 15 further comprising:

first register means for storing and specifying single precision and double precision operand signals for Scientific insructions;

said crack logic means being responsive to said signals from said first register means and said selected signals from said one of said plurality of instructions specifying a Scientific instruction for generating said SP/DP signal.

14

EP 0 374 830 A2

DATA PROCESSING SYSTEM 1

Fig. 1

Fig. 2

*Fig. 3-1*



EP 0 374 830 A2

Fig. 3-2

Fig. 3-3

EP 0 374 830 A2

_Fig. 4_

RDR
5

NBR 0 - 13

0  1  2  3  4  5  6  7  8  9  10  11  12  13  14

GENERIC

| 0 | I | 0 | I | OP | CODE | 9-15 | | ST | RDR 19 | ⌐114 |

IMMEDIATE

| 0 | I | I | 0 | 0 | 0 | 0 | 0 | BI EI | OP CODE 6 7 | 0 | NPRY 7 | RDR 18 19 | ⌐116 |

BASIC/EII

RDR
| 0 | 0 | B-0 E-1 | S-0 D-1 | OP CODE 4-8 | | AT | --- BT DT 18 19 | ⌐118 |

SIP

OP1 OP2
| 0 | I | 0 | 0 | S0-0 D0-1 | OP CODE 1 5 7 | S-0 I-1 | AT | SP-0 DP-1 | SP-0 DP-1 | RDR 18 - 19 | ⌐120 |

## Fig. 5

INSTRUCTION

0                               15 16                          31 33 35 36

    9        C        C        0        0        0        4        F                          ⌐122

LDBI INSTRUCTION

| 10 01 | 11 00 | 11 00 | 00 00 | 00 00 | 00 00 | 01 00 | 11 11 | 00 | 10 | 0 |

OP CODE                                                                    2

CONTROL STORE ADDR. TO EXECUTE THE LDBI INSTRUCTION

| 0 0 0 I I I 0 0 I I 0 0 0 I 0 | ⌐124

0        E        6        2

## Fig. 7

Fig. 6

EP 0 374 830 A2

A UNIT 2-4 OPERATION OF THE
LOAD BI (LDBI) INSTRUCTION 9CCO 004F$_H$ (P+D)

RDR(A)2-406      16(0)      2-450

**RB-OPW**
SELECT   CONTENTS   OF
RINSTR   2-400 (9CCO 004F)$_H$

19-20  (00)      2-452

**INDEX 0**
INDEX SHIFTER 2-410
SELECTS   0000 004F$_H$
FROM   RINSTR 2-400

29-31 (000)      2-454

**AUB-RB 16:31**
APPLY   0000 004F   TO
B SIDE   OF ALU 2-412

26-28   (000)      2-456

**AUA-P**
APPLY CONTENTS   OF
PROGRAM CTR (P) 2-416
TO A SIDE OF ALU 2-412

34-37(1)$_H$      2-458

**AU-A+B+1**
ADD P(1000)$_H$+ DISP(4F)$_H$+1
= 1050$_H$ (VIRTUAL ADDRESS)

41-42 (3)$_H$      2-460

**VALU P**
ASSEMBLE   VIRTUAL
ADDRESS   1050$_H$

32-33 (00)      2-462

**OFFSET**
INDICATES WORD AND BYTE
OFFSET FROM MEMORY WORD
BOUNDARY
E-OFF(0)(DW AT WORD BOUNDARY)

43(1)      2-464

**QLD**
LOAD VIRTUAL ADDRESS
INTO Q REG 2-418

54-63(100)$_H$      2-466

**VI-I**
OFFSET VALID TRANSFER
VIRTUAL ADDRESS 1050$_H$
TO VMMU 4

44-45 (10)      2-468

**PP2**
INCREMENT PROGRAM
CTR 2-416 BY 2

53(1)      2-470

**A-DONE**
SEND A-DONE SIGNAL
TO I UNIT 2-2

_Fig. 8A_

E UNIT 2-6 OPERATION OF THE
LOAD BI (LDBI) INSTRUCTION 9CC0 004F$_H$ (P+D)

RDR(E)2-606 45-46(01) 2-650

**DW**
DATA ALIGNED IN D-FIFO
2-630 FOR DOUBLE WORD
OPERAND NO OFFSET(E-OFF=0)

47(1) 2-652

**AUA DAT**
OPERAND FROM D-FIFO 2-630 TO
A PORT OF ALU 2-608

71-77(03)$_H$ 2-654

**RNG-REF**
REF-FIFO 2-632 APPENDS
RING NUMBER (0,1) TO BITS
2-31 OF OPERAND

22-27 (3F)$_H$ 2-656

**AU-A**
ALU 2-608 PROCESSES OPERAND

88-89 (01) 2-658

**ALU-DW**
ALU 2-608 CONFIGURED FOR
DOUBLE WORD

66-67 (01) 2-660

**RSLT-PTR**
RESULT MUX 2-622 SELECTS
BITS 0,1 FROM REF-FIFO 2-632
AND BITS 2-31 FROM ALU 2-608

31-37(1,001,001)$_B$ 2-662

**A-BX**
GENERATE REGISTER FILE 2-610
A ADDRESS (09)$_H$ FROM MICRO
001 AND INSTRUCTION (1-3) 001$_B$
(09$_H$ LOCATION OF REG BI )

79-82 (01)$_H$ 2-664

**RFW(A)**
WRITE DOUBLE WORD OPERAND
TO BI OF REGISTER FILE (A)
2-610

29,1-3 (04) 2-668

**MBFMT (3FFE)**
**MBR**
BRANCH TO NEXT E-UNIT
CONTROL STORE 2-604
RDR(E) 2-206 4,5,18,19(2)$_H$

$Fig.$ 8B